# EUROPÄISCHE PATENTSCHRIFT

(11) **EP 0 824 779 B1**
(45) Veröffentlichungstag und Bekanntmachung des Hinweises auf die Patenterteilung: **13.01.1999**
(21) Anmeldenummer: 96915024.2
(22) Anmeldetag: 07.05.1996
(51) Int. Cl.: H02J 9/06

(54) **VERFAHREN UND SCHALTUNGSANORDNUNG ZUR DECKUNG VON ENERGIESPITZENBEDARF BEI ELEKTRISCHEN WECHSELSTROM- BZW. DREHSTROMNETZEN**
PROCESS AND CIRCUITRY TO COVER PEAK ENERGY DEMANDS IN ELECTRIC ALTERNATING OR THREE-PHASE CURRENT NETWORKS
PROCEDE ET CIRCUITS PERMETTANT DE COUVRIR DES POINTES DE CONSOMMATION D'ENERGIE DANS DES RESEAUX ELECTRIQUES A COURANT ALTERNATIF OU TRIPHASE

(30) Priorität: 08.05.1995 DE 19516838
(43) Veröffentlichungstag der Anmeldung: 25.02.1998
(73) Patentinhaber: Bayern-Werk AG, 80335 München (DE); HAGEN Batterie AG, D-59494 Soest (DE)
(72) Erfinder: SCHERMANN, Dietolf, D-85375 Neufahrn (DE); HEINDLMEIER, Hans, D-83607 Holzkirchen (DE)
(74) Vertreter: Manitz, Gerhart, Dr.
(86) Internationale Anmeldenummer: EP9601904
(87) Internationale Veröffentlichungsnummer: WO9636100

(56) Entgegenhaltungen:
- EP-A- 0 578 531
- M.C. CHANDORKAR ET AL 'CONTROL OF DISTRIBUTED UPS SYSTEMS', 20 Juni 1994, PROCEEDINGS OF THE ANNUAL POWER ELECTRONICS SPECIALISTS CONFERENCE, TAIPEI, TAIWAN, JUNE 20 - 24, 1994, VOL. 1, PAGE(S) 197 - 204, IEEE SOCIETY XP000492018
- M.C. CHANDORKAR ET AL 'NOVEL ARCHITECTURES AND CONTROL FOR DISTRIBUTED UPS SYSTEMS', 9TH PROCEEDINGS OF THE APPLIED POWER ELECTRONICS CONFERENCE, FEB. 13-17, 1994, ORLANDO, FLORIDA, VOL 2, PAGE(S) 683 - 689, IEEE SOCIETY XP000467381

## Beschreibung

Die Erfindung betrifft ein Verfahren zur Deckung von Energiespitzenbedarf bei elektrischen Wechsel- bzw. Drehstromnetzen nach dem Oberbegriff des Patentanspruchs 1 und eine Schaltungsanordnung zur Deckung von Energiespitzenbedarf bei elektrischen Wechselstrom- bzw. Drehstromnetzen nach dem Oberbegriff des Patentanspruchs 13. Die Notstromversorgung wird im allgemeinen durch ein von Akkumulatoren gespeistes Gleichstromnetz realisiert.

Es ist bereits bekannt, daß für die Bereitstellung von schnell aktivierbarer Wirkleistungsreserve in Elektrizitätsversorgungssystemen die großen Verbundunternehmen mindestens 2,5 % der gesamten Erzeugungsleistung als sogenannte Primärregelreserve vorbehalten müssen.

Dies erfolgt üblicherweise durch thermische Erzeugungseinheiten mittels der Turnbinenbetriebsart "gesteuerter Gleitdruck". Dadurch lassen sich bis zu 5 % der Nennleistung mit der geforderten Dynamik als Primärregelreserve zur Verfügung stellen.

Diese Betriebsweise führt jedoch einerseits zu Wirkungsgradeinbußen. Andererseits können Erzeugungseinheiten mit günstigen Primärenergiekosten nicht mit ihrer Nennleistung betrieben werden, um die 5 % Primärregelreserve vorzuhalten. Beides zusammen führt zu Mehrkosten bei der Bereitstellung elektrischer Energie.

Weiter ist es bekannt, daß zur Notstromversorgung z.B. von Steuerspannungsanlagen, Fernmeldeanlagen, unterbrechungsfreie Anlagen, wie z.B. für Computer, besonderen Ersatzstromversorgungen, z.B. bei Operationssälen in Krankenhäusern, Sicherheitsbeleuchtungsanlagen, Kraftwerken, Umspannwerken, Fernmeldeämtern, Krankenhäusern, Großbauten allgemein, etc. Notstromversorgungen mit Gleichrichtern und elektrochemischen Speichern verwendet werden. Die hierfür verwendeten Industrieakkumulatoren bzw. -batterien haben im allgemeinen eine Lebensdauer von 10 bis 20 Jahren, werden aber während ihrer gesamten Lebensdauer einschließlich der Testzeiten nur ca. 50 mal genutzt. Auch derartige bekannte Notstromversorgungen sind also letztlich wegen mangelnder Nutzung der teuren elektrochemischen Energiespeicher unwirtschaftlich.

Schließlich sind auch schon ausschließlich mit Akkumulatoren und den dafür erforderlichen Aufladeeinrichtungen versehene Akkumulator-Hilfskraftwerke bekannt, deren Akkumulatoren in bedarfsschwachen Zeiten über Gleichrichter aufgeladen werden und welche über Wechselrichter in die angeschlossenen Netze elektrische Energie einspeisen, wenn ein höherer Bedarf vorliegt. Diese Akkumulator-Hilfskraftwerke sind mit Pumpspeicherwerken vergleichbar. Sie müssen eigens für die Lieferung von Spitzenbedarf bereitgestellt werden und haben sonst keine Funktion.

Das Ziel der vorliegenden Erfindung besteht darin, ein Verfahren und eine Schaltungsanordnung der eingangs genannten Gattung zu schaffen, welche in der Lage sind, äußerst schnell, jedoch nur kurzzeitig Spitzenbedarfenergie für Wechsel- und Drehstromnetze mit geringem Aufwand auf besonders wirtschaftliche Weise zur Verfügung zu stellen.

Zur Lösung dieser Aufgabe sind die Maßnahmen nach den Ansprüchen 1 bzw. 15 vorgesehen.

Der Erfindungsgedanke ist also darin zu sehen, daß an Stromnetze angeschlossene Notstromversorgungen, deren Einzelkapazität für eine Spitzenlastbefriedigung nicht ausreicht, deren summierte Gesamtkapazität jedoch beträchtliche Werte erreichen kann, außer zur Bereitstellung der Notstromversorgungsenergie zusätzlich zur Bereitstellung von Energie für die Deckung eines kurzzeitigen Spitzenlastbedarfs verwendet werden.

Die kurzzeitig zur Verfügung gestellte, geballte Energiekapazität sämtlicher oder zumindest eines großen Teils der angeschlossenen Notstromversorgungen dient in erster Linie dazu, die Zeit zu überbrücken, die erforderlich ist, um die die Grundenergie zur Verfügung stellenden Kraftwerke auf den neuen erhöhten Lastbedarf hochzufahren.

Auf diese Weise brauchen die Kraftwerke nicht oder jedenfalls nicht in dem bisher üblichen Maße mit Leistungsvorhaltung gefahren zu werden, so daß die Arbeitsweise der Kraftwerke wesentlich wirtschaftlicher gestaltet werden kann.

Andererseits wird für die kurzzeitige Bereitstellung eines beträchtlichen Überlastbedarfs entweder kein zusätzlicher Akkumulator benötigt, oder es wird die Zahl der für die Notstromversorgung vorgesehenen Akkumulatoren um ein geringes Vielfaches z.B. gemäß den Ansprüchen 13 oder 26 erhöht, wovon auch die Notstromversorgung profitiert. Es werden also in erster Linie die in den Notstromversorgungen bereits vorhandenen oder zu diesen noch in geringem Umfang hinzugefügten, dezentralen Akkumulatoren durch gesteuerte Zusammenfassung von einer Zentrale aus für die kurzzeitige Bereitstellung des Spitzenbedarfs herangezogen. Hierbei muß lediglich darauf geachtet werden, daß den einzelnen Notstromversorgungen nur ein solcher Bruchteil der gespeicherten Energie entzogen wird, daß sie ihre eigentliche Funktion als Notstromlieferant noch erfüllen können.

Dies ist jedenfalls dann gewährleistet, wenn das Verfahren gemäß der Ausgestaltung nach Anspruch 2 ausgeführt wird.

Aufgrund der erfindungsgemäßen Maßnahmen kann die Spitzenbedarfsenergie gemäß Anspruch 3 im Millisekundenbereich zur Verfügung gestellt werden. Die Erfindung eignet sich somit besonders zur Sekundenreserveleistungsbereitstellung.

Die Ausgestaltung gemäß den Ansprüchen 4 oder 5 eignet sich in besonderem Maße für die gleichzeitige Verwendung von Akkumulatoren für eine Notstromversorgung einerseits und einen Netz-Spitzenbedarfs-Lieferbetrieb andererseits. Da Akkumulatoren bei hohen Strömen nur begrenzt Kapazität abgeben, wird durch die für einen Spitzenbedarfs-Lieferbetrieb erforderliche hohe Stromaufnahme automatisch erreicht, daß für die Notstromversorgung noch eine ausreichende Energiereserve in den Akkumulatoren verbleibt, welche im Gegensatz zu einer Spitzenlastbefriedigung deswegen zur Verfügung steht, weil die für die Notstromversorgung erforderlichen Ströme so gering gehalten werden, daß die Kapazität der Akkumulatoren voll ausgeschöpft werden kann.

Die üblichen Eigenschaften von Akkumulatoren bzw. Batterien eignen sich besonders für die gleichzeitige Bereitstellung einer Spitzenlastreserve und einer Notstromversorgung.

Bevorzugt wird die Stromentnahme im Spitzenlastbetrieb aufgrund geeigneter Ausbildung der Wechselrichter so eingestellt, daß die Energie für den Spitzenlastbedarf innerhalb der im Anspruch 6 angegebenen Zeiten zur Verfügung steht.

Eine besonders wirtschaftliche und effektive Verfahrensweise ist durch Anspruch 7 gekennzeichnet. Der Grundgedanke dieser Ausführungsform besteht darin, daß zwar im Notstromversorgungsbetrieb nur ein geringer Bruchteil der Stundenkapazität der Akkumulatoren pro Zeiteinheit entnommen wird, daß jedoch bei Spitzenbedarfs-Lieferung - ähnlich wie beispielsweise beim Starten eines Kraftfahrzeugs - den Akkumulatoren kurzzeitig ein Strom in der Größenordnung von 100% der Stundenkapazität entnommen wird. Dies hat den Vorteil, daß bei Spitzenbedarfslieferung nur ein begrenzter Teil der Akkumulatorkapazität frei wird und somit für die Notstromversorgung noch genügend Kapazität erhalten bleibt.

Die Ausgestaltung nutzt auf diese Weise die besonderen Eigenschaften von elektrischen Akkumulatoren, bei Entnahme von geringen Strommengen über längere Zeiten die volle Kapazität, jedoch kurzzeitig einen extrem hohen Strom bei herabgesetzter Kapazität abgeben zu können, in optimaler Weise für die Gewährleistung einer effektiven Notstromversorgung einerseits und der Zurverfügungstellung von Spitzenbedarfsenergie andererseits aus.

Um die Energieentnahme aus den Akkumulatoren beim Spitzenbedarfsbetrieb bis zu einem Maße durchführen zu können, wo die Akkumulatorspannung so weit absinkt, daß eine einwandfreie Notstromversorgung gefährdet ist, ist die Weiterbildung nach den Patentansprüchen 8 bis 11 vorgesehen. Der Grundgedanke dieser Weiterbildung besteht darin, daß durch einen Gleichspannungsregler, der insbesondere durch einen Hochsetzsteller verwirklicht ist, das Absinken der Akkumulatorspannung gerade so kompensiert wird, daß an den Notstromverbrauchern die gewünschte Nennspannung zur Verfügung steht. Auf diese Weise kann ohne weiteres ein substantieller Teil der Akkumulatorkapazität für die Spitzenbedarfsbefriedigung herangezogen werden, ohne daß die Notstromversorgung gefährdet wird. Im allgemeinen ist es bei Verwendung eines Gleichspannungsregelungsgerätes möglich, um die 30 % der Akkumulatorkapazität für die Spitzenbedarfsbefriedigung bzw. die Zurverfügungstellung einer Sekunden- oder Minutenreserve zur Verfügung zu stellen, da der Rest von 70 % für die Notstromversorgung insbesondere dann ausreicht, wenn die Zahl der Notstromversorgungsakkumulatoren etwas aufgestockt wird. Die Verwendung von Hochsetzstellern für die Konstanthaltung einer Ausgangsgleichspannung auch bei absinkender Akkumulatorspannung ist an sich bekannt, erfüllt jedoch gemäß vorliegender Erfindung deswegen eine besondere Funktion, weil die Notstromversorgung während des Spitzenbedarfs-Lieferbetriebs nicht mehr gewährleistet werden könnte, wenn nicht durch die Gleichspannungsregelung während dieser Zeit eine weitgehend konstante Gleichspannung für die Notstromversorgung zur Verfügung gestellt werden würde. Bei einer normalen Notstromversorgung haben die Hochsetzsteller dagegen nur eine Zusatzfunktion, indem sie die an sich auch ohne Hochsetzsteller gewährleistete Energieentnahme aus den Akkumulatoren zeitlich etwas verlängern.

Nachdem Gleichspannungsregelgeräte im allgemeinen einen höchst zulässigen Maximalstrom aufweisen, ist die weitere Ausführungsform nach Anspruch 12 vorgesehen, welche gewährleistet, daß auch im Falle eines Kurzschlusses auf der Notstromverbraucherseite noch ausreichend Strom fließen kann, um beispielsweise im Notstromverbraucherkreis vorhandene Sicherungen ansprechen zu lassen.

Die Ausführung nach den Patentansprüchen 13 hat den Vorteil, daß in Umspannwerken bereits hohe Notstrom-Akkumulatorkapazitäten und die Räumlichkeiten für eine Aufstockung der Notstrom-Akkumulatorzahl zur Verfügung stehen.

Eine Schaltungsanordnung gemäß der Erfindung entnimmt man dem Anspruch 15. Bevorzugt ist außer der Ausbildung nach den Ansprüchen 16 und 17 die Zusammenfassung von Gleichrichter und Wechselrichter in einem Umkehrstromrichter nach Anspruch 18.

Die erfindungsgemäße Schaltungsanordnung kann insbesondere bei Netzen verwendet werden, wie sie durch die Ansprüche 19 und 20 gekennzeichnet sind.

Von besonderer Bedeutung für die praktische Realisierung der Erfindung sind die weiteren Ausführungsformen nach den Patentansprüchen 21 bis 24, weil durch das Gleichspannungsregelgerät im Spitzenbedarfsbetrieb eine wesentlich größere Entladung der Akkumulatoren ermöglicht ist, ohne daß die Versorgung des Notstromversorgungsnetzes mit der vorgesehenen Nennspannung gefährdet wird.

Die Ausführungsform der Schaltungsanordnung nach Anspruch 23 gestattet beispielsweise im Falle eines Kurzschlusses auf der Notstromverbraucherseite auch das Fließen höherer Ströme als des Maximalstroms des Gleichspannungsregelgerätes.

Die Weiterbildung der Erfindung nach Anspruch 26 ist deswegen vorteilhaft, weil hierdurch nicht nur zusätzliche Kapazität für die Rückspeisung von Energie in das Netz zur Verfügung gestellt wird, sondern auch das Notstromversorgungsnetz sicherer gestaltet wird, denn die deutlich erhöhte Kapazität verlängert nicht nur die Wirksamkeit des Notstromversorgungsnetzes im Falle einer Störung im Hauptnetz, sondern ermöglicht auch eine wesentlich stärkere Entladung der Akkumulatoren bei der Netzrückspeisung, ohne daß das Verbleiben einer für die Notstromversorgung ausreichenden Energiereserve in den Akkumulatoren gefährdet wird.

Mit besonderem Vorteil wird die Erfindung nach Anspruch 27 in Umspannwerken eingesetzt, wo bereits erhebliche Akkumulatorkapazitäten für die Notstromversorgung und für die Unterbringung weiterer Akkumulatoren zur Verfügung stehen.

Die Erfindung wird im folgenden beispielsweise anhand der Zeichnung beschrieben, in dieser zeigt:
- Figur 1: ein Blockschaltbild eines Drehstromnetzes mit daran angeschlossenen Verbrauchern mit und ohne Notstromversorgung, wobei die Notstromversorgung erfindungsgemäß gleichzeitig die Bereitstellung von in das Netz rückzuspeisender elektrischer Energie gewährleistet, und
- Figur 2: ein Blockschaltbild einer erfindungsgemäßen Schaltungsanordnung in Anwendung bei Umspannwerken.

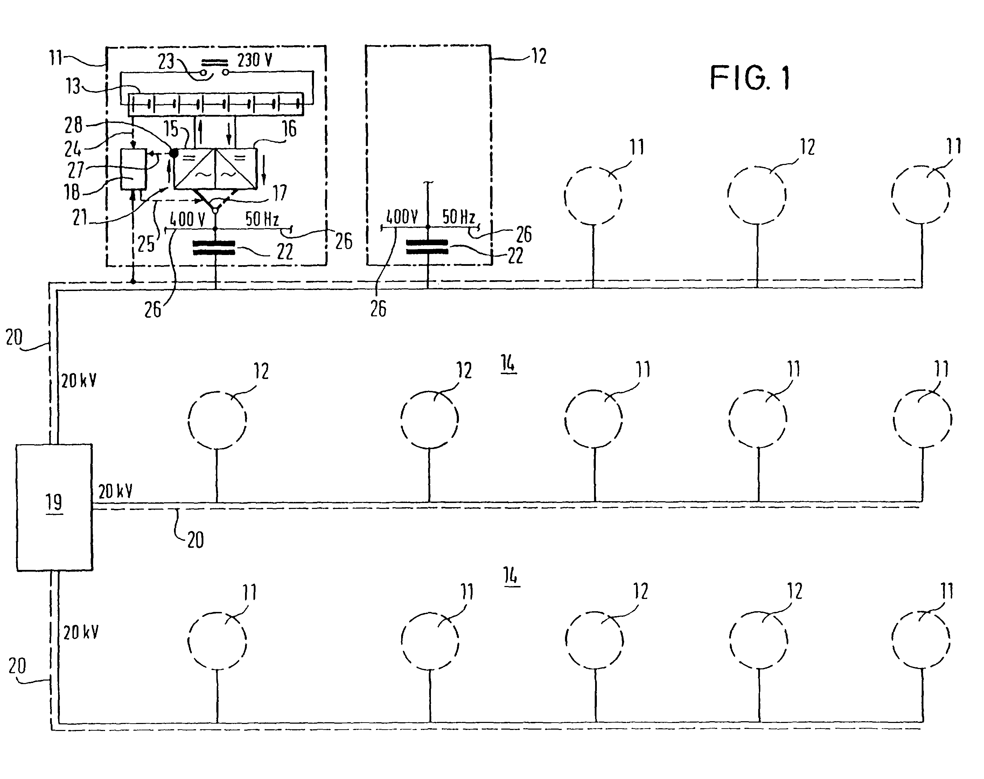

Nach Figur 1 sind an ein Drehstrom-Mittelspannungsnetz 14 mit einer Spannung von z.B. 20 kV, welches von einer Netzzentrale 19 über 220/380 kV-ll0 kV-20 kV-Umspannwerke gespeist wird, über Transformatoren 22 zahlreiche Verbraucher 11, 12 angeschlossen. Jeder Transformator 22 speist ein Niederspannungs-Drehstromnetz 26 mit einer Spannung von 400 V und einer Frequenz von 50 Hz.

Während die Verbraucher 11 zusätzlich zum Netz 26 eine Notstromversorgungsnetz 23 aufweisen, besitzen die Verbraucher 12 eine solche Notstromversorgung nicht.

Das Notstromversorgungsnetz 23 der Verbraucher 11 wird einen Satz von hintereinandergeschalteten, unter Umständen aber auch teilweise parallelgeschalteten Akkumulatoren 13, dessen Ausgangsspannung beispielsweise 220 V beträgt. Aufgeladen werden die Akkumulatoren 13 durch einen Gleichrichter 15, der über einen gesteuerten Schalter 17 an den Ausgang des Transformators 22 bzw. an das Drehstromnetz 26 angeschlossen ist. Auf diese Weise werden die Akkumulatoren 13 ständig im voll aufgeladenen Zustand gehalten.

Parallel zum Gleichrichter 15 ist ein Wechselrichter 16 an den Satz von Akkumulatoren 13 angelegt, welcher durch Umlegen des gesteuerten Schalters 17 oder bevorzugt durch eine schalterlose Steuerung in die gestrichelt angedeutete Position an das Drehstromnetz 26 und damit an die Sekundärseite des Transformators 22 anschließbar ist.

An jedem mit einer Notstromversorgung ausgestatteten Verbraucher 11 ist ein Steuergerät 18 vorgesehen, welches über eine Steuerleitung 24 mit den Daten der Akkumulatoren 18, insbesondere mit deren Ausgangsspannung gespeist wird. Berücksichtigt werden können auch Daten wie Ladebilanz, Leistungsbilanz, Arbeitsverrechnung, Fehlbehandlung, Lebensdauerfaktoren. Außerdem empfängt das Steuergerät 18 über eine weitere Steuerleitung 20 auch Spitzenbedarfs-Schaltsignale von der Netzzentrale 19. Die entsprechenden Steuersignale werden bevorzugt analog wie die Signale von Rundsteuereinrichtungen über die Netzleitung an das Steuergerät 18 geliefert, so daß sich eine separate Steuerleitung 20 erübrigt. Bei kleineren Anlagen kann die Inanspruchnahme ohne direkte Verbindung zur Netzzentrale erfolgen. Das Steuergerät mißt eine z.B. jährliche, tarifabrechenbare Arbeit. Die Funktionstüchtigkeit liegt im tariflich abrechenbaren Interesse beim Betreiber.

Das Steuergerät 18 steuert den gesteuerten Schalter 17 entweder in die in der Zeichnung in ausgezogenen Linien dargestellte Position, in der der Gleichrichter 15 an das Netz 26 angeschlossen ist, oder in die in gestrichelten Linien angedeutete Position, in welcher statt des Gleichrichters 15 der Wechselrichter 16 an das Netz 26 angelegt ist. Das Steuergerät 18 ist hierzu über eine Steuerleitung 25 mit dem gesteuerten Schalter 17 verbunden.

Bevorzugt sind der Gleichrichter 15 und der Wechselrichter 16 zu einem Umkehrstromrichter 21 zusammengefaßt, welcher über die Steuerleitung 25 wahlweise als Gleichrichter oder Wechselrichter geschaltet werden kann.

Die Funktion der beschriebenen Schaltungsanordnung ist wie folgt:

Im Normalbetrieb wird der gesteuerte Schalter 17 durch das Steuergerät 18 in die in der Zeichnung in ausgezogenen Linien dargestellte Position gebracht, in welcher die Gleichrichter 15 an das Drehstromnetz 26 angeschlossen sind. In dieser Position werden die Akkumulatoren 13 aufgeladen und, da im Normalfall das Notstromversorgungsnetz 23 keine Energie verbraucht, in voll aufgeladenem Zustand gehalten.

Wenn jetzt im Netz 14 plötzlich ein Spitzenbedarf entsteht, so liefert die Netzzentrale 19, bei der es sich um den üblichen Lastverteiler handeln kann, ein geeignetes Signal an die Steuergeräte 18 sämtlicher mit einem Notstromversorgungsnetz 23 ausgestatteten Verbraucher 11, welche darauf den Gleichrichter 15 vom Drehstromnetz 26 durch Umlegen des Schalters 17 abschalten und stattdessen den Wechsel-Ausgang der Wechselrichter 16 an das Drehstromnetz 26 anlegen, sofern das Steuergerät 18 einen ausreichenden Ladezustand der zugeordneten Akkumulatoren 13 festgestellt hat.

Bei kleineren Anlagen wird die Regelenergie ohne Rundsteuerung direkt aus dem Netz abgefordert. Um die Freigabe solcher Anlagen im tarifwirksamen Bereich einzurichten, müssen private Betreiber die Dimensionierung mit dem zuständigen Elektrizitätsversorgungsunternehmen abstimmen. Hierbei sind die Größe der Batterie, des Umkehrstromrichters oder eines ähnlichen Bauteils und die Höhe der wechselnden Lasten im eigenen privaten Netz die Dimensionierungs- und tarifbestimmenden Amortisationsgrößen.

Der Schaltvorgang des Schalters 17 soll im Millisekundenbereich erfolgen, und zwar insbesondere dann, wenn der Gleichrichter 15 und der Wechselrichter 16 zu einem elektronisch gesteuerten Umkehrstromrichter 21 zusammengefaßt sind. Innerhalb von wenigen Millisekunden können somit die Akkumulatoren 13 sämtlicher an das Netz 14 angeschlossenen Notstromversorgungsnetze 23 geballt Energie in das Netz 14 einspeisen, und zwar bevorzugt nur für eine Zeit von 2 bis 10 Minuten. Die Gesamtanordnung kann nach einer ersten Ausführungsform so dimensioniert sein, daß innerhalb dieser Zeit die in den Akkumulatoren 13 gespeicherte Energiemenge nur um max. 20 % abnimmt, so daß auch für den Fall, daß plötzlich eine Notstromversorgung erforderlich wird, noch ausreichend Energie dafür zur Verfügung steht. Bei Neuanlagen oder Erweiterungen bestehender Anlagen kann die gespeicherte Energiemenge auch so ausgelegt werden, daß eine größere Energiemenge als 20 %, z.B. 30 %, entnommen werden kann. Notstromenergiebedarf und Netz-Spitzenbedarf bestimmen gemeinsam die gesamte gespeicherte Energie.

Steht beispielsweise eine Akkumulatoranlage 13 mit einer Kapazität von 200 Ah zur Verfügung, so kann diese im Notstromversorgungsfall für beispielsweise 5 Stunden eine Energie in der Größenordnung von 50 kWh liefern.

Es ist auch möglich, daß der Akkumulatoranlage im Notstromversorgungsfall nur 10% des der Kapazität entsprechenden Stromes, also beispielsweise 20 Ampere über 10 Stunden entnommen werden.

Im Spitzenbedarfsbetrieb beträgt die entnommene Energiemenge bei 10-minütiger Entnahme etwa 8,5 kWh und bei 2-minütiger Entnahme 1,7 kWh, wobei der Umkehrstromrichter 50 kVA bzw. 100 kVA liefert. Im letztgenannten Fall soll der Umkehrstromrichter 21 temperaturgeführt sein.

Die Transformatoren 22 der einzelnen Verbraucher 11, 12 sind im allgemeinen wenigstens für eine Leistung von 500 kVA ausgelegt. Für die Zwecke der vorliegenden Erfindung ist der Eigenbedarfstransformator 22 generell so dimensioniert, daß er keine Leistungseinschränkung im 10-Minuten-Wechselrichterbetrieb erforderlich macht.

Die Umkehrstromrichter 21 haben generell eine Überlastbarkeit von 2,5 der Nennleistung über 2 Minuten. Bevorzugt wird ein netzgeführter Umlenkstromrichter 21 verwendet, welcher keine besondere Netzüberwachung und -regelung erfordert. Die Netzzuleitung muß entsprechend angepaßt werden.

Je nach Bauart der Akkumulatoren ist eine höhere Überlastbarkeit bei niedrigerem Innenwiderstand gegeben. Bevorzugt sind Systeme mit niedrigem Widerstand und guter Ladbarkeit und Zykleneigenschaften, z.B. die OCSM-Technik der Anmelderin.

Das Steuergerät 18 kontrolliert die kWh-Bilanz des Akkumulators 13 und überwacht zusätzlich über eine Steuerleitung 27 die Temperatur des Stromumrichters 21, an dem zu diesem Zweck ein Temperatursensor 28 angebracht ist, der die Steuerleitung 27 speist. Weiter soll das Steuergerät 18 in vorteilhafter Weise auch die Steuerspannungsebene-Gleichspannung, die Netzfrequenz und Netzspannung, den Akkumulatorzustand, mit einer Rundsteueranlage die Schwachlast-Ladezuschaltzeiten, die Ausgleichsladung und dergl. überwachen.

Es werden also Energiespeicher und Regelanlagen in Kombination mit elektrochemischen Speichern und netzgeführten Umkehrstromrichtern (Drehrichtern) für zentrale und dezentrale Elektroversorgungsunternehmens- und Großkundennetze zur Verfügung gestellt, welche dadurch gekennzeichnet sind, daß alle vorhandenen und künftigen dezentralen Ressourcen an elektrochemischen Speichern, die bislang nur als Gleichstrom-Standby-Versorgung benutzt wurden, zusätzlich im Kurzzeitenergiebereich für Regelleistung im Drehstromnetz gemeinsam herangezogen werden. Als Folgeschritt können die Energiespeicher und Regelanlagen mit netzgeführten Stromumrichtern ausgestattet werden, wobei die Anwendungsbereiche Phasenharmonisierung, Phasenschieben, Sofortreserve, Spitzenlastausgleich, Schwachlastausnutzung als Tag/Nachtspeicher, in der dezentralen Kleinanlage mit eingeschlossen werden können.

Die Erfindung läßt sich bei bestehenden Anlagen durch Austausch des Gleichrichters durch einen entsprechend der Akkumulatorgröße dimensionierten Umkehrstromrichter mit ca. 10-Minuten-Leistung anwenden. Bei neuen Anlagen empfiehlt es sich, die Akkumulatoren und die Umkehrstromrichter entsprechend der vorhandenen Transformatorgröße zu dimensionieren, und die verfügbaren räumlichen Gegebenheiten und vorhandene Potentiale voll ausschöpfen zu können.

Auf diese Weise kann sowohl bei bestehenden als auch bei neuen Anlagen der Einsatz eines Umkehrstromrichters mit einer Frequenz-Spannungsregelung mit Akkumulatorbilanzierung über Ferninformation bzw. -Steuerung erfolgen.

Die durch die Erfindung erzielten Vorteile bestehen in der Verbesserung
- der Regelgeschwindigkeit und dadurch Verminderung der Regelleistung,
- des Primärenergieeinsatzes von bestehenden Regelanlagen auch durch Schwachlastausnutzung,
- des schrittweisen Vorgehens bei den Investitionen angepaßt an die tatsächlichen Bedarfsleistungen,
- der wirtschaftlicheren Ausnutzung von dezentralen, baulichen und verteilungsmäßigen Voraussetzungen,
- der Ausnutzung von bereits vorhandenen Energiespeicherpotentialen und Verbesserung von deren Wirkungsgrad,
- der Transportwege von elektrischer Leistung durch Vermeidung von Spitzenlast- und Regeltransport durch dezentralen Einsatz, und
- der Anlagenkomponenten mittels weitergehender Entwicklungstätigkeiten über diese sehr wirtschaftlichen, aber kleinen Anlagen zum Einsatz von Großanlagen für Spitzenlast und Tag/Nachtspeicher.

Ein besonderer Vorteil ist also darin zu sehen, daß der Spitzenlastbedarf nicht von einer zentralen Stelle unter Einspeisung einer großen Energiemenge bereitgestellt wird, sondern durch viele dezentrale Kleinanlagen, die ihre Energie zwar in kleinen Mengen, jedoch über das Gesamtnetz relativ gleichmäßig verteilt ins Netz einspeisen. Auf diese Weise werden die Widerstandsverluste bei Einspeisung des Spitzenbedarfs deutlich herabgesetzt.

In Figur 1 ist die Ausbildung der Verbraucher 11, 12 im einzelnen nur einmal dargestellt. Die mit den Bezugszahlen 11, 12 bezeichneten gestrichelte Kreise repräsentieren die gleiche Ausbildung, wie sie links oben im einzelnen einmal gezeigt ist.

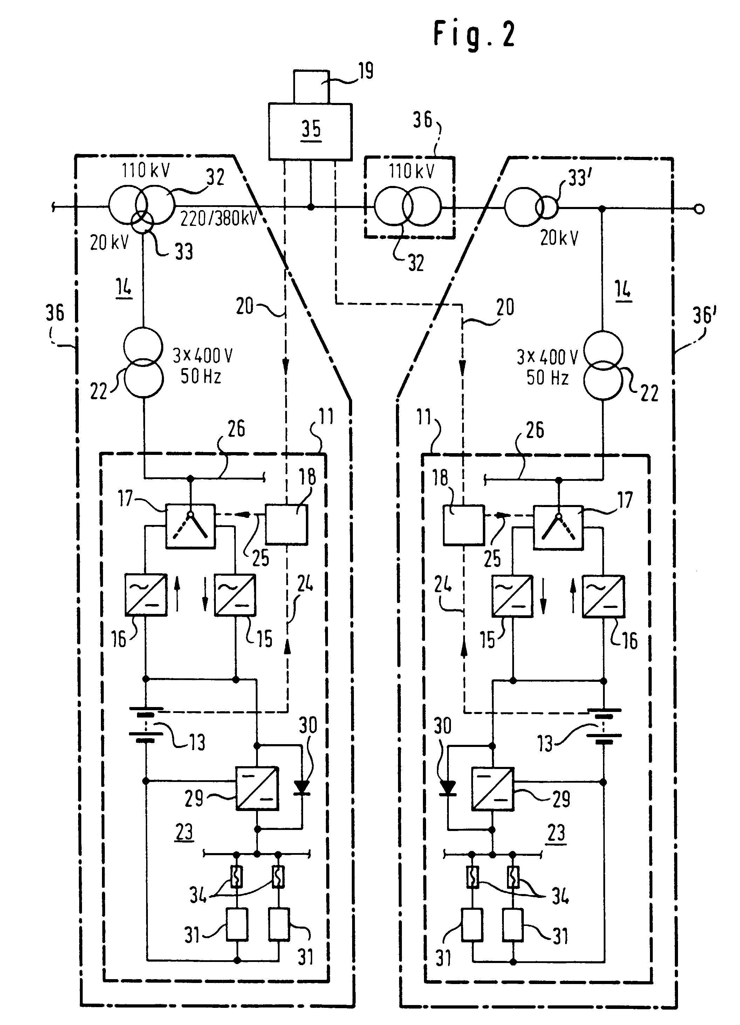

In Figur 2 bezeichnen gleiche Bezugszahlen entsprechende Bauelemente wie in Figur 1.

Nach Figur 2 speist ein die Netzzentrale 19 aufweisendes Kraftwerk 35 ein 220/380 kV-Drehstromnetz, welches in bestimmten Abständen Umspannwerke 36 und Transformatoren 32 aufweist, die die Hochspannung auf 110 kV heruntertransformieren. Die 110-kV-Spannung wird dann entweder im gleichen Umspannwerk 36 (Darstellung in der linken Hälfte von Figur 2) oder in einem regionalen Umspannwerk 36' am Anfang eines Regionalnetzes (Darstellung in der rechten Hälfte von Figur 2) über eine am Transformator 32 vorgesehene Tertiärwicklung 33 bzw. über ein weiteres Transformatorsystem 33' auf 20 kV heruntertransformiert. Der Ausgang der Tertiärwicklung 33 bzw. des Transformators 33' liegt an dem Drehstrom-Mittelspannungsnetz 14 an, dessen Spannung durch Transformatoren 22 auf eine Spannung von 3 x 400 V herabtransformiert und an ein Verbraucher 11 umfassendes Drehstromnetz 26 geliefert wird, welches sich innerhalb des Umspannwerkes 36, 36' befindet und lediglich zum Anschluß an eine gegebenenfalls durch zusätzliche Akkumulatorkapazität verstärkte Notstromversorgung bestimmt und ausgebildet sein kann.

Wie beim Ausführungsbeispiel nach Figur 1 sind die Niederspannungsdrehstromnetze 26 über gesteuerte Schalter 17, insbesondere Halbleiterschalter an die Gleichrichter 15 bzw. Wechselrichter 16 angeschlossen, die an einen Satz von Akkumulatoren 13 angelegt sind. Es ist darauf hinzuweisen, daß in Figur 2 vom Kraftwerk 35 bis zu den Akkumulatoren 13 der Einfachheit halber die einpolige Leitungsdarstellung gewählt ist, während im Anschluß an die Akkumulatoren 13 sowohl die positiven als auch die negativen Leitungen schematisch wiedergegeben sind.

Das Steuergerät 18 empfängt wieder die Daten vom Akkumulator 13 über eine Steuerleitung 24 sowie die Steuersignale von der Netzzentrale 19 über eine Steuerleitung 20 und bildet aus den empfangenen Signalen ein Steuersignal für den gesteuerten Schalter 17, welches über die Steuerleitung 25 an diesen angelegt ist.

In Figur 2 sind auch jeweils zwei an das Notstromversorgungsnetz 23 über Sicherungen 34 angeschlossene Notstromverbraucher 31 dargestellt.

In Ergänzung der Schaltung nach Figur 1 weisen die Notstromversorgungsnetze 23 nach Figur 2 zwischen den Akkumulatoren 13 und den Notstromverbrauchern 31 ein Gleichspannungsregelgerät in Form eines Hochsetzstellers 29 auf, dem eine in Durchlaßrichtung geschaltete Gleichrichteranordnung, insbesondere Diode 30 parallelgeschaltet ist. Der Hochsetzsteller 29 liefert an seinem Ausgang eine der Volladespannung des Satzes von Akkumulatoren 13 entsprechende oder um einige Prozente darüberliegende Spannung, und zwar unabhängig davon, um welchen Wert die Spannung der Akkumulatoren 13 innerhalb eines vorbestimmten Bereiches von beispielsweise zwischen 220 V und 180 V absinkt. Auf diese Weise werden die Notstromverbraucher 31 auch beim Absinken der Akkumulatorspannung mit der erforderlichen Nennspannung versorgt, was besonders beim Entnehmen von Akkumulatorenergie für die Spitzenbedarfsbefriedigung wichtig ist.

Die parallel zu den Hochsetzstellern 29 geschaltete Diode 30 hat den Zweck, daß bei einem Kurzschluß auf der Notstromverbraucherseite ein den Maximalstrom des Hochsetzstellers 29 überschreitender Strom fließen kann, welcher beispielsweise dazu erforderlich ist, im Stromkreis der Notstromverbraucher 31 vorgesehene Sicherungen 34 zum Ansprechen, insbesondere Durchbrennen zu bringen.

Der Hochsetzsteller 29 wird so gesteuert bzw. betrieben, daß die Spannung an seinem Ausgang etwas positiver als am Eingang ist, so daß durch die Diode 30 so lange kein Strom fließt, wie der Hochsetzsteller 29 einen unterhalb seines Maximalstroms liegenden Betriebsstrom führt. Erst wenn der Maximalstrom erreicht wird, wird die Eingangsseite des Hochsetzstellers 29 etwas positiver als die Spannung an der Ausgangsseite, so daß nunmehr Strom auch über die Diode 30 fließen und insbesondere so groß werden kann, daß die Sicherungen 34 ansprechen können.

Nach Figur 2 wird also die Notstromversorgung eines 220/380-kV-Umspannwerkes 36 oder eines regionalen 110-kv-Umspannwerkes 36' für die Zwecke der Erfindung herangezogen. Dies hat den Vorteil, daß weitgehend auf vorhandene Einrichtungen, wie Gebäudeanteil, 20-kV-Schaltanlage, 20 kV/400 V-Transformatoren, 400-V-Schaltanlagen und Gleichstromverteilung in vollem Umfang zurückgegriffen werden kann und lediglich die Wechselrichter 16 sowie die Schalt- und Steuerelemente 17, 18 zusätzlich installiert werden müssen. Weiter besteht hier der Vorteil, daß die Akkumulatorensätze bereits von Haus aus relativ hohe Kapazitäten aufweisen. Da die Batterieräume von derartigen Umspannwerken 36, 36' im allgemeinen ausreichend Platz für die Unterbringung zusätzlicher Akkumulatorkapazitäten aufweisen, ist es vorteilhaft, wenn in den Batterieräumen beispielsweise statt einer Akkumulatorkapazität von 300 Ah eine solche von z.B. 1740 Ah untergebracht wird. Dies stellt nicht nur eine höhere Energierückspeisungskapazität zur Verfügung, sondern bedeutet auch eine wesentliche Verbesserung der Notstromversorgung, indem diese im Falle einer Störung länger betrieben werden kann. Außerdem kann im Netz-Spitzenbedarfsbetrieb eine stärkere Entladung der Akkumulatoren 13 erfolgen, da auch in diesem Fall die Restkapazität insbesondere in Verbindung mit den Hochsetzstellern 29 noch für eine ausreichende Versorgung des Notstromversorgungsnetzes 23 ausreicht.

Bei 220/380-kV-Umspannwerken kann auf diese Weise eine sofortige Leistungsreserve für ca. 15 Minuten zur Verfügung gestellt werden. In normalen Netzen sollten 10 bis 30, insbesondere etwa 20 größere Umspannwerke 36 zur Verfügung stehen, um eine ausreichende Leistungsreserve mittels der verwendeten Akkumulatoren 13 bereitzustellen. So kann eine Netzreserve von ca. 500 kW pro Umspannwerk bereitgestellt werden, was bei Zusammenschaltung von 20 größeren Umspannwerken einer Sofortreserve von ca. 10 MW entspricht.

Kleinere Leistungen bis zu 200 kW pro Umspannwerk ließen sich auch in kleineren Umspannwerken 36' in analoger Weise realisieren.

Erfindungsgemäß werden die Gleichrichter 15 während der Netzrückspeisung über die Wechselrichter 16 durch die Umschalter 17 abgeschaltet. Die erfindungsgemäß verwendeten Hochsetzsteller 29 gewährleisten bei Spannungseinbrüchen an den Akkumulatoren 13 um bis zu 50 V weiterhin eine Versorgung der Notstromverbraucher 31 mit der Nennspannung von 220 V.

Eine weitere Möglichkeit der Realisierung der Erfindung besteht darin, daß auch ohne Steuerleitung (20 in Figur 1) zum Lastverteiler eine Energieumkehr im Akkumulator dann automatisch stattfindet, wenn das Netz die Energie zur Stützung in Anspruch nimmt. Geeignete Maßnahmen ermitteln die zur Verfügung gestellte Arbeit bzw. Jahresbilanz zwecks Tarifgegenrechnung oder über eine Grundgebühr je nach Größe der Akkumulatoren und der theoretisch gegebenen Möglichkeiten.

### Bezugszeichenliste

- 11: Verbraucher mit Notstromversorgung
- 12: Verbraucher ohne Notstromversorgung
- 13: Akkumulator
- 14: Netz
- 15: Gleichrichter
- 16: Wechselrichter
- 17: gesteuerter Schalter
- 18: Steuergerät
- 19: Netzzentrale
- 20: Steuerleitung
- 21: Umkehrstromrichter
- 22: Transformator
- 23: Notstromversorgungsnetz
- 24: Steuerleitung
- 25: Steuerleitung
- 26: Drehstromnetz
- 27: Steuerleitung
- 28: Temperatursensor
- 29: Gleichspannungsregelgerät (Hochsetzsteller)
- 30: Gleichrichteranordnung (Diode)
- 31: Notstromverbraucher
- 32: Transformator
- 33: Tertiärwicklung
- 33': Transformator
- 34: Sicherung
- 35: Kraftwerk
- 36: Umspannwerk
- 36': Umspannwerk

## Patentansprüche

1. Verfahren zur Deckung von Energiespitzenbedarf bei elektrischen Wechselstrom- bzw. Drehstromnetzen mit einer Vielzahl von Verbrauchern (11, 12), von denen wenigstens ein Teil (11) mit Akkumulatoren (13) und vom Netz (14) gespeiste Gleichrichter (15) aufweisenden Notstromversorgung ausgestattet ist,
dadurch gekennzeichnet,
daß bei einem kurzzeitigen Spitzenbedarf des Netzes (14) ein Bruchteil der Energie aus den Akkumulatoren (13) der individuellen, dezentralen Notstromversorgungsnetze (23) über Wechselrichter (16) solange in das Netz (14) eingespeist wird, wie ein Spitzenbedarf vorliegt und in den Akkumulatoren (13) noch ausreichend Energie für die Notstromversorgung zur Verfügung steht.

2. Verfahren nach Anspruch 1,
dadurch gekennzeichnet,
daß den Akkumulatoren (13) für die Deckung des Spitzenbedarfes des Netzes (14) nur soviel Energie entnommen wird, daß der Energieinhalt der Notstromversorgungsnetze höchstens 50%, vorzugsweise höchstens 30 bis 40% und insbesondere höchstens 20% des maximalen Energieinhalts absinkt.

3. Verfahren nach Anspruch 1 oder 2,
dadurch gekennzeichnet,
daß die Energie der Notstromversorgungsnetze (23) innerhalb von Millisekunden zur Verfügung gestellt wird.

4. Verfahren nach einem der vorhergehenden Ansprüche,
dadurch gekennzeichnet,
daß den Akkumulatoren (13) im Spitzenlast-Lieferbetrieb ein so hoher Strom entnommen wird, daß die Akkumulatoren (13) bei Aufrechterhaltung einer für den Betrieb der Wechselrichter (16) noch ausreichenden Spannung nur einen Bruchteil ihrer Kapazität abgeben können.

5. Verfahren nach Anspruch 4,
dadurch gekennzeichnet,
daß der Bruchteil 10 bis 50 %, bevorzugt 20 bis 40 % und insbesondere etwa 30 % beträgt.

6. Verfahren nach einem der vorhergehenden Ansprüche,
dadurch gekennzeichnet,
daß die Energie aus den Akkumulatoren (13) für den Spitzenlastbedarf nur für Minuten, vorzugsweise 1 bis 20 Minuten und insbesondere 2 bis 10 Minuten zur Verfügung gestellt wird.

7. Verfahren nach einem der vorhergehenden Ansprüche,
dadurch gekennzeichnet,
daß den Akkumulatoren (13) im Spitzenbedarfs-Lieferbetrieb ein Strom in Höhe von im wesentlichen 100 % der Stundenkapazität, im Notstromversorgungsbetrieb ein Strom in Höhe von nur bis maximal 20 %, insbesondere größenordnungsmäßig 10 % der Stundenkapazität entnommen wird.

8. Verfahren nach einem der vorhergehenden Ansprüche,
dadurch gekennzeichnet,
daß die Spannung des Notstromversorgungsnetzes (23) durch ein Gleichspannungsregelgerät (29) unabhängig von der Akkumulatorspannung auf einem zumindest im wesentlichen konstanten Soll-Wert gehalten wird.

9. Verfahren nach einem der vorhergehenden Ansprüche,
dadurch gekennzeichnet,
daß die Energieentnahme aus den Akkumulatoren (13) bei Spitzenbedarfs-Lieferbetrieb innerhalb der kurzen Zeit mit solcher Intensität erfolgt, daß die Akkumulatorenspannung deutlich unter den für den Betrieb des Notstromversorgungsnetzes (23) vorgesehenen Nennwert abgesunken ist.

10. Verfahren nach Anspruch 9,
dadurch gekennzeichnet,
daß die Energieentnahme aus den Akkumulatoren (13) bei Spitzenbedarfs-Lieferbetrieb innerhalb der kurzen Zeit mit solcher Intensität erfolgt, daß die Akkumulatorenspannung um 10 bis 30 %, insbesondere etwa 20 % unter den für den Betrieb des Notstromversorgungsnetzes (23) vorgesehenen Nennwert oder die Akkumulator-Volladespannung abgesunken ist.

11. Verfahren nach Anspruch 10 mit wenigstens einem eine Gleichspannung von im wesentlichen 220 V liefernden Satz von Akkumulatoren (13),
dadurch gekennzeichnet,
daß die Energieentnahme aus den Akkumulatoren (13) bei Spitzenbedarfs-Lieferbetrieb innerhalb der kurzen Zeit bis zu einer Abnahme der Akkumulatorengleichspannung auf 170 bis 190 V, insbesondere etwa 180 V erfolgt.

12. Verfahren nach einem der Ansprüche 8 bis 11,
dadurch gekennzeichnet,
daß parallel zum Gleichspannungsregelgerät (29) eine Gleichrichteranordnung (30) in Durchlaßrichtung gepolt angeordnet ist, welche bei Anforderung eines über dem Maximalstrom des Gleichspannungsregelgerätes (29) liegenden Notstromverbrauch die Gleichstromleitung ganz oder teilweise übernimmt.

13. Verfahren nach einem der vorhergehenden Ansprüche,
dadurch gekennzeichnet,
daß die Kapazität der Akkumulatoren (13) um das 2- bis 10-fache, vorzugsweise das 4- bis 8-fache und insbesondere etwa das 6-fache der für das Notstromversorgungsnetz (23) vorgesehenen Normalkapazität erhöht wird.

14. Verfahren nach einem der vorhergehenden Ansprüche,
dadurch gekennzeichnet,
daß der Verbraucher (11) die Niederspannungsebene von z.B. 400 V in einem Umspannwerk ist.

15. Schaltungsanordnung zur Deckung von Energiespitzenbedarf bei elektrischen Wechselstrom- bzw. Drehstromnetzen mit einer Vielzahl von Verbrauchern (11, 12), von denen wenigstens ein Teil (11) mit einer Notstromversorgung ausgestattet ist, die Akkumulatoren (13) und zu deren Aufladung vom Netz (14) gespeiste Gleichrichter (15) aufweist, insbesondere zur Ausführung des Verfahrens nach einem der vorhergehenden Ansprüche,
dadurch gekennzeichnet,
daß zumindest ein wesentlicher Teil aller mit einem Notstromversorgungsnetz (23) ausgestatteten Verbraucher (11) zusätzlich mit wenigstens einem von den elektrischen Akkumulatoren (13) gespeisten Wechselrichter (16) ausgestattet ist, der vermittels eines Steuergerätes (18) statt des Gleichrichters (15) an das Netz (14) anlegbar ist und eine solche Stromleitkapazität aufweist, daß die Akkumulatoren (13) bei an das Netz angelegten Wechselrichtern (16) innerhalb einer kurzen Zeit von bevorzugt einigen Minuten, vorzugsweise 1 bis 20 Minuten und insbesondere 2 bis 10 Minuten einen deutlichen Bruchteil ihrer Energie von bevorzugt 10 bis 50 %, zweckmäßigerweise 20 bis 40 % und insbesondere 30 % an das Netz (14) abgeben können.

16. Schaltungsanordnung nach Anspruch 15,
dadurch gekennzeichnet,
daß das Steuergerät (18) über Steuerleitungen (20, 24) mit einer Netzzentrale (19) bzw. mit den Akkumulatoren (13) verbunden ist und den Wechselrichter über eine weitere Steuerleitung (25) an das Netz (14) anschließt, wenn
- ein kurzzeitiger Spitzenbedarf des Netzes (14) zu decken ist und
- der Ladezustand der zugeordneten elektrischen Energiespeicher, insbesondere Akkumulatoren (13) dies gestattet,
und vom Netz (14) abtrennt, wenn eine der vorgenannten Bedingungen nicht mehr erfüllt ist.

17. Schaltungsanordnung nach Anspruch 15 oder 16,
dadurch gekennzeichnet,
daß der Wechselrichter (16) durch Betätigung eines gesteuerten Schalters (17) statt des Gleichrichters (15) mit dem Netz (14) verbindbar ist.

18. Schaltungsanordnung nach einem der vorhergehenden Ansprüche,
dadurch gekennzeichnet,
daß der Gleichrichter (15) und der Wechselrichter (16) in einem Umkehrstromrichter (21) vereinigt sind, der durch das Steuergerät (18) über die Steuerleitung (15) wahlweise als Gleichrichter (15) oder Wechselrichter (16) schaltbar ist.

19. Schaltungsanordnung nach einem der Ansprüche 15 bis 18,
dadurch gekennzeichnet,
daß das Netz (14) ein Mittelspannungsdrehstromnetz von beispielsweise 20 kV ist, an welches die Verbraucher (11, 12) über Transformatoren (22) angeschlossen sind, welche eine Niederwechsel- bzw. Drehstromspannung von z.B. 400 V abgeben.

20. Schaltungsanordnung nach Anspruch 19,
dadurch gekennzeichnet,
daß die elektrischen Energiespeicher, insbesondere Akkumulatoren (13) an das Notstromversorgungsnetz (23) eine Niedergleichspannung von z.B. 220 V liefern.

21. Schaltungsanordnung nach einem der Ansprüche 15 bis 20,
dadurch gekennzeichnet,
daß zwischen die Akkumulatoren (13) und die Notstromverbraucher (31) ein Gleichspannungsregelgerät (29) geschaltet ist, welches die an dem bzw. den Notstromverbraucher(n) (31) anliegende Spannung bis zu einem vorbestimmten Absinken der Akkumulatorspannung zumindest im wesentlichen konstant hält.

22. Schaltungsanordnung nach Anspruch 21,
dadurch gekennzeichnet,
daß das Gleichspannungsregelgerät ein Hochsetzsteller (29) ist.

23. Schaltungsanordnung nach Anspruch 21 oder 22,
dadurch gekennzeichnet,
daß das Gleichspannungsregelgerät (29) die an dem bzw. den Notstromverbrauchern (31) anliegende Spannung bis zu einem Absinken der Akkumulatorspannung um 10 bis 30 %, insbesondere etwa 20 % unterhalb des Volladewertes zumindest im wesentlichen konstant hält.

24. Schaltungsanordnung nach einem der Ansprüche 21 bis 23 mit wenigstens einem eine Gleichspannung von im wesentlichen 220 V liefernden Satz von Akkumulatoren (13),
dadurch gekennzeichnet,
daß das Gleichspannungsregelgerät (29) so ausgebildet ist, daß die Energieentnahme aus den Akkumulatoren (13) bei Spitzenbedarfs-Lieferbetrieb bis zu einer Abnahme der Akkumulatorgleichspannung auf 170 bis 190 V, insbesondere etwa 180 V erfolgt.

25. Schaltungsanordnung nach einem der Ansprüche 21 bis 24,
dadurch gekennzeichnet,
daß parallel zum Gleichspannungsregelgerät (29) eine Gleichrichteranordnung (30), insbesondere eine Diode in Durchlaßrichtung gepolt angeordnet ist, welche bei Anforderung eines über dem Maximalstrom des Gleichspannungsregelgerätes (29) liegenden Notstromverbrauch die Gleichstromleitung ganz oder teilweise übernimmt.

26. Schaltungsanordnung nach einem der Ansprüche 15 bis 25,
dadurch gekennzeichnet,
daß die Kapazität der Akkumulatoren (13) um das 2- bis 10-fache, vorzugsweise das 4- bis 8-fache und insbesondere etwa das 6-fache der für das Notstromversorgungsnetz (23) vorgesehene Normalkapazität erhöht ist.

27. Schaltungsanordnung nach einem der Ansprüche 15 bis 26,
dadurch gekennzeichnet,
daß der Verbraucher (11) die Niederspannungsebene von z.B. 400 V in einem Umspannwerk ist.

## Claims

1. Method of covering the peak energy demand in electrical AC or three-phase current networks having a plurality of consumers (11, 12) of which at least a part (11) is equipped with accumulators (13) and stand-by power supply having rectifiers (15) fed from the network (14), characterized in that for a short term peak demand of the network (14) a fraction of the energy is fed from the accumulators (13) of the individual decentral stand-by power supply networks (23) into the network (14) via inverters (16) as long as a peak demand is present and sufficient energy for the stand-by power supply is still available in the accumulators (13).

2. Method in accordance with claim 1, characterized in that only so much energy is taken from the accumulators (13) to cover the peak demand of the network (14) that the energy content of the stand-by supply networks sinks by at most 50 %, preferably by at most 30 to 40 %, and in particular by at most 20 % of the maximum energy content.

3. Method in accordance with claim 1 or claim 2, characterized in that the energy of the stand-by supply networks (23) is made available within milliseconds.

4. Method in accordance with one of the preceding claims, characterized in that, in peak load delivery operation, a current is taken from the accumulators (13), which is so high that the accumulators (13) can only give up a fraction of their capacity while maintaining a voltage which is still sufficient for the operation of the inverters (16).

5. Method in accordance with claim 4, characterized in that the fraction amounts to 10 to 50 %, preferably to 20 to 40 %, and in particular to approximately 30 %.

6. Method in accordance with one of the preceding claims, characterized in that the energy from the accumulators (13) is made available for the peak load demand only for minutes, preferably from 1 to 20 min. and in particular for 2 to 10 min.

7. Method in accordance with one of the preceding claims, characterized in that in peak demand delivery operation a current at the level of substantially 100 % of the hour capacity is taken from the accumulators (13), in stand-by supply operation a current with a level of only up to a maximum of 20 %, in particular of the order of magnitude of 10 % of the hour capacity.

8. Method in accordance with one of the preceding claims, characterized in that the voltage of the stand-by supply network (23) is kept at an at least substantially constant desired value, independent of the accumulator voltage, by a DC voltage regulating apparatus (29).

9. Method in accordance with one of the preceding claims, characterized in that the energy extraction from the accumulators (13) in peak demand delivery operation takes place within a short time with such an intensity that the accumulator voltage sinks significantly below the nominal value envisaged for the operation of the stand-by power supply network (23).

10. Method in accordance with claim 9, characterized in that the energy extraction from the accumulators (13) in peak demand delivery operation takes place within the short time with such an intensity that the accumulator voltage has sunk by 10 to 20 %, and in particular by about 20 % beneath the nominal value or the fully charged accumulator voltage provided for the operation of the stand-by power supply network (23).

11. Method in accordance with claim 10 having at least one set of accumulators (13) delivering a DC voltage of substantially 220 V, characterized in that the energy removal from the accumulators (13) in peak demand delivery operation takes place within a short time up until a reduction of the DC accumulator voltage to 170 to 190 V, in particular to about 180 V.

12. Method in accordance with one of the claims 8 to 11, characterized in that a rectifier arrangement (30) poled in the forward direction is arranged parallel to the DC regulating apparatus (29) and wholly or partly takes on the current conduction when a stand-by current consumption is demanded, which lies above the maximum current of the DC regulating apparatus (29).

13. Method in accordance with one of the preceding claims, characterized in that the capacity of the accumulators (13) is increased by 2 to 10 times, in particular 4 to 8 times and in particular approximately 6 times the normal capacity provided for the stand-by power supply network (23).

14. Method in accordance with one of the preceding claims, characterized in that the consumer (11) is the low voltage level of, for example, 400 V in a sub-station.

15. Circuit arrangement for covering the peak energy demand in an electrical AC or three-phase current network having a plurality of consumers (11, 12), of which at least a part (11) is equipped with a stand-by power supply which has accumulators (13) and rectifiers (15) fed from the network (14) for the charging of the accumulators, in particular for carrying out the method in accordance with one of the preceding claims, characterized in that at least a substantial part of all the consumers (11) equipped with a stand-by power supply network (23) is additionally equipped with at least one inverter (16) fed from the electrical accumulators (13), which, by means of a control apparatus (18), can be applied to the network (14) instead of the rectifier (15), and which has a current conducting capacity such that the accumulators (13) can transmit a substantial fraction of their energy of preferably 10 to 15 %, expediently 20 to 40 % and in particular 30 % to the network (14) within a short period of time of preferably a few minutes, preferably 1 to 20 min. and in particular 2 to 10 min. when the rectifiers (16) are applied to the network.

16. Circuit arrangement in accordance with claim 15, characterized in that the control apparatus (18) is connected via control lines (20, 24) to a network center (19) and to the accumulators (13) and connects the inverter via a further control line (25) to the network (14) when
- a short term peak demand of the network (14) has to be covered, and
- the state of charge of the associated electrical energy store, in particular accumulators (13), permits this,
and is separated from the network (14) when one of the above named conditions is no longer satisfied.

17. Circuit arrangement in accordance with claim 15 or claim 16, characterized in that the inverter (16) can be connected to the network (14) in place of the rectifier (15) by actuation of a controlled switch (17).

18. Circuit arrangement in accordance with one of the preceding claims, characterized in that the rectifier (15) and the inverter (16) are united into a two-way converter (21) which can be selectively switched as a rectifier (15) or inverter (16) by the control apparatus (18) via the control line (15).

19. Circuit arrangement in accordance with one of the claims 15 to 18, characterized in that the network (14) is a medium voltage three-phase current network of, for example, 20 k to which the consumers (11, 12) are connected via transformers (22) which transmit a low AC voltage or three-phase voltage of, for example, 400 V.

20. Circuit arrangement in accordance with claim 19, characterized in that the electrical energy stores, in particular accumulators (13), deliver a low DC voltage of, for example, 220 V to the stand-by power supply network (23).

21. Circuit arrangement in accordance with one of the claims 15 to 20, characterized in that a DC regulating apparatus (29) is inserted between the accumulators (13) and the stand-by power load (31), which maintains the voltage applied to the stand-by power load or loads (31) at least substantially constant up to a predetermined reduction of the accumulator voltage.

22. Circuit arrangement in accordance with claim 21, characterized in that the DC regulating apparatus is a step-up setter (29).

23. Circuit arrangement in accordance with claim 21 or claim 22, characterized in that the DC regulating apparatus (29) keeps the voltage applied to the stand-by power load or loads (31) at least substantially constant until the accumulator voltage has sunk by 10 to 30 %, in particular by about 20 % beneath the full charge value.

24. Circuit arrangement in accordance with one of the claims 21 to 23, having at least one set of accumulators (13) delivering a DC voltage of substantially 220 V, characterized in that the DC regulating apparatus (29) is so designed that the energy extraction from the accumulators (13) in peak demand delivery operation takes place up to a reduction of the accumulator DC voltage to 170 to 190 V, in particular to approximately 180 V.

25. Circuit arrangement in accordance with one of the claims 21 to 24, characterized in that a rectifier arrangement (30), in particular a diode poled in the forward direction, is arranged parallel to the DC voltage regulating apparatus (29), and wholly or partly takes on the DC current conduction when a stand-by power consumption lying above the maximum current of the DC regulating apparatus (29) is required.

26. Circuit arrangement in accordance with one of the claims 15 to 25, characterized in that the capacity of the accumulators (13) is increased by 2 to 10 times, preferably 4 to 8 times and in particular approximately 6 times the normal capacity provided for the stand-by power supply network (23).

27. Circuit arrangement in accordance with one of the claims 15 to 26, characterized in that the consumer (11) is the low voltage level of, for example, 400 V in a sub-station.

## Revendications

1. Procédé pour couvrir des demandes énergétiques de pointe dans des réseaux électriques à courant alternatif ou triphasé, avec une multitude de consommateurs (11, 12), dont une partie (11) au moins est équipée d'accumulateurs (13) et d'une alimentation en courant de secours comportant des redresseurs (15) alimentés par le réseau (14), caractérisé en ce que lors d'une brève demande de pointe du réseau (14), une fraction de l'énergie est alimentée via des onduleurs (16) dans le réseau (14) depuis les accumulateurs (13) des réseaux d'alimentation de secours individuels décentralisés (23), pendant aussi longtemps qu'il existe une demande de pointe et qu'une énergie suffisante est encore disponible dans les accumulateurs (13) pour l'alimentation de secours.

2. Procédé selon la revendication 1, caractérisé en ce que pour couvrir la demande de pointe du réseau (14), on prélève depuis les accumulateurs (13) seulement une quantité d'énergie telle que la puissance énergétique des réseaux d'alimentation de secours baisse pour passer au maximum à 50 %, de préférence au maximum à une valeur entre 30 à 40 % et en particulier au maximum à 20 % de la puissance énergétique maximale.

3. Procédé selon l'une ou l'autre des revendications 1 et 2, caractérisé en ce que l'énergie des réseaux d'alimentation de secours (23) est mise à disposition en quelques millisecondes.

4. Procédé selon l'une quelconque des revendications précédentes, caractérisé en ce que pendant le fonctionnement en fourniture de demande de pointe, on prélève un courant si élevé depuis les accumulateurs que les accumulateurs (13) ne peuvent dégager qu'une fraction de leur capacité tout en maintenant une tension encore suffisante pour le fonctionnement des onduleurs (16).

5. Procédé selon la revendication 4, caractérisé en ce que la fraction est de 10 à 50 %, de préférence de 20 à 40 %, et en particulier d'environ 30 %.

6. Procédé selon l'une quelconque des revendications précédentes, caractérisé en ce que l'énergie provenant des accumulateurs (13) pour les demandes de pointe est mise à disposition uniquement pour quelques minutes, de préférence pour 1 à 20 minutes et en particulier pour 2 à 10 minutes.

7. Procédé selon l'une quelconque des revendications précédentes, caractérisé en ce que pendant le fonctionnement en fourniture de demande de pointe, on prélève depuis les accumulateurs (13) un courant à hauteur de sensiblement 100 % de la capacité horaire, et pendant le fonctionnement d'alimentation de secours on prélève un courant à hauteur de seulement 20 % au maximum, en particulier de l'ordre de 10 % de la capacité horaire.

8. Procédé selon l'une quelconque des revendications précédentes, caractérisé en ce que la tension du réseau d'alimentation de secours (23) est maintenue à une valeur de consigne au moins sensiblement constante par un appareil régulateur à tension continue (29) indépendamment de la tension de l'accumulateur.

9. Procédé selon l'une quelconque des revendications précédentes, caractérisé en ce que le prélèvement d'énergie hors des accumulateurs (13) pendant le fonctionnement en fourniture de demande de pointe a lieu à l'intérieur de la durée brève à une intensité telle que la tension d'accumulateur est abaissée nettement au-dessous de la valeur nominale prévue pour le fonctionnement du réseau d'alimentation de secours (23).

10. Procédé selon la revendication 9, caractérisé en ce que le prélèvement d'énergie hors des accumulateurs (13) pendant le fonctionnement en fourniture de demande de pointe a lieu à l'intérieur de la durée brève à une intensité telle que la tension d'accumulateur est abaissée de 10 à 30 %, en particulier d'environ 20 % au-dessous de la valeur nominale prévue pour le fonctionnement du réseau d'alimentation de secours (23) ou au-dessous de la tension de pleine charge de l'accumulateur.

11. Procédé selon la revendication 10 avec au moins un groupe d'accumulateurs (13) fournissant une tension continue de sensiblement 220 V, caractérisé en ce que le prélèvement d'énergie hors des accumulateurs (13) pendant le fonctionnement en fourniture de demande de pointe a lieu à l'intérieur de la durée brève jusqu'à une réduction de la tension continue des accumulateurs à une valeur de 170 à 190 V, en particulier de 180 V.

12. Procédé selon l'une quelconque des revendications 8 à 11, caractérisé en ce qu'en parallèle à l'appareil régulateur à tension continue (29) est agencé un dispositif redresseur (30) polarisé en direction de passage qui reprend totalement ou partiellement la ligne à courant continu lors de l'appel d'une consommation de courant de secours située au-dessus du courant maximal de l'appareil régulateur à tension continue (29).

13. Procédé selon l'une quelconque des revendications précédentes, caractérisé en ce que la capacité des accumulateurs (13) est augmentée de deux à dix fois, de préférence de quatre à huit fois, et en particulier d'environ six fois la capacité normale prévue pour le réseau d'alimentation de secours (23).

14. Procédé selon l'une quelconque des revendications précédentes, caractérisé en ce que le consommateur (11) est l'étage à basse tension de par exemple 400 V dans un poste de transformation.

15. Circuit pour couvrir des demandes énergétiques de pointe dans des réseaux électriques à courant alternatif ou triphasé, avec une multitude de consommateurs (11, 12), dont une partie (11) au moins est équipée d'une alimentation en courant de secours comportant des accumulateurs (13) et des redresseurs (15) alimentés par le réseau (14) pour leur recharge, en particulier pour mettre en oeuvre le procédé selon l'une quelconque des revendications précédentes, caractérisé en ce qu'une partie essentielle au moins de tous les consommateurs (11) équipés du réseau d'alimentation de secours est équipée en supplément d'au moins un onduleur (16) qui est alimenté par les accumulateurs électriques (13), qui est susceptible d'être branché au réseau (14), à la place du redresseur (15), au moyen d'un appareil de commande (18), et qui présente une capacité conductrice de courant telle que, lorsque les onduleurs (16) sont branchés au réseau, les accumulateurs (13) peuvent fournir au réseau (14) à l'intérieur d'une durée brève de préférence de quelques minutes, de préférence 1 à 20 minutes et en particulier 2 à 10 minutes, une fraction nette de leur énergie de préférence de 10 à 50 %, judicieusement de 20 à 40 % et en particulier de 30 %.

16. Circuit selon la revendication 15, caractérisé en ce que l'appareil de commande (18) est branché via des lignes de commande (20, 24) à une centrale de réseau (19) ou aux accumulateurs (13), en ce qu'il connecte l'onduleur au réseau (14) via une autre ligne de commande (25), lorsque
- une brève demande de pointe du réseau (14) est à couvrir, et
- l'état de charge des réservoirs d'énergie électriques associés, en particulier des accumulateurs (13), le permet,
et en ce qu'il le sépare vis-à-vis du réseau (14), lorsque l'une des conditions précitées n'est plus remplie.

17. Circuit selon l'une ou l'autre des revendications 15 et 16, caractérisé en ce que l'onduleur (16) est susceptible d'être connecté au réseau (14), à la place du redresseur (15), par actionnement d'un commutateur commandé (17).

18. Circuit selon l'une quelconque des revendications précédentes, caractérisé en ce que le redresseur (15) et l'onduleur (16) sont réunis dans un inverseur de courant (21) qui est commutable au choix comme redresseur (15) ou comme onduleur (16) par l'appareil de commande (18) via la ligne de commande (15).

19. Circuit selon l'une quelconque des revendications 15 à 18, caractérisé en ce que le réseau (14) est un réseau à courant triphasé moyenne tension de par exemple 20 KV, auquel sont branchés les consommateurs (11, 12) via des transformateurs (22) qui fournissent une tension alternative basse ou triphasée de par exemple 400 V.

20. Circuit selon la revendication 19, caractérisé en ce que les réservoirs d'énergie électriques, en particulier les accumulateurs (13), fournissent au réseau d'alimentation de secours (23) une tension continue basse de par exemple 220 V.

21. Circuit selon l'une quelconque des revendications 15 à 20, caractérisé en ce que, entre les accumulateurs (13) et les consommateurs de courant de secours (31), est connecté un appareil régulateur à tension continue (29) qui maintient du moins sensiblement constante la tension appliquée au(x) consommateur(s) de courant de secours (31) jusqu'à un abaissement prédéterminé de la tension des accumulateurs.

22. Circuit selon la revendication 21, caractérisé en ce que l'appareil régulateur à tension continue est un convertisseur élévateur de tension (29).

23. Circuit selon l'une ou l'autre des revendications 21 et 22, caractérisé en ce que l'appareil régulateur à tension continue (29) maintient du moins sensiblement constante la tension appliquée au(x) consommateur(s) de courant de secours (31) jusqu'à un abaissement de la tension des accumulateurs de 10 à 30 %, en particulier d'environ 20 % au-dessous de la valeur de pleine charge.

24. Circuit selon l'une quelconque des revendications 21 à 23, comportant au moins un groupe d'accumulateurs (13) fournissant une tension continue de sensiblement 220 V, caractérisé en ce que l'appareil régulateur à tension continue (29) est réalisé de telle sorte que le prélèvement d'énergie hors des accumulateurs (13) pendant le fonctionnement en fourniture de demande de pointe a lieu jusqu'à un abaissement de la tension continue des accumulateurs à une valeur de 170 à 190 V, en particulier d'environ 180 V.

25. Circuit selon l'une quelconque des revendications 21 à 24, caractérisé en ce qu'en parallèle à l'appareil régulateur à tension continue (29) est agencé un redresseur (30), en particulier une diode polarisée en direction de passage, qui reprend totalement ou partiellement la ligne à courant continu lors de l'appel d'une consommation de courant de secours située au-dessus du courant maximal de l'appareil régulateur à tension continue (29).

26. Circuit selon l'une quelconque des revendications 15 à 25, caractérisé en ce que la capacité des accumulateurs (13) est augmentée de deux à dix fois, de préférence de quatre à huit fois, et en particulier d'environ six fois la capacité normale prévue pour le réseau d'alimentation de secours (23).

27. Circuit selon l'une quelconque des revendications 15 à 26, caractérisé en ce que le consommateur (11) est l'étage à basse tension de par exemple 400 V dans un poste de transformation.
